# EUROPEAN PATENT APPLICATION

(11) **EP 4 831 214 A1**
(43) Date of publication of application: **28.10.2026**
(21) Application number: 24924969.9
(22) Date of filing: 24.04.2024
(51) Int. Cl.: C08F 290/06, C08F 290/14, C08F 283/00, C08F 220/58, C08F 220/20, C08F 2/50, C08L 51/08, C08L 29/04, C08K 5/156, C08K 3/04

(54) **3D STRUCTURE MANUFACTURING METHOD USING CASTING MOLD MADE OF WATER-SOLUBLE PHOTOCURABLE RESIN, AND WATER-SOLUBLE PHOTOCURABLE RESIN COMPOSITION FOR MANUFACTURING CASTING MOLD**

(30) Priority: 16.02.2024 KR 20240022452; 22.04.2024 KR 20240053236
(71) Applicant: Oh, Jung Hyun, Daejeon 35240 (KR); Hahm, Eun Jeong, Seoul 06713 (KR)
(72) Inventor: Oh, Jung Hyun, Daejeon 35240 (KR); Hahm, Eun Jeong, Seoul 06713 (KR)
(74) Representative: Isarpatent
(86) International application number: PCT/KR2024/005540
(87) International publication number: WO 2025/173825

(57) **Abstract**

Provided are a method for manufacturing a 3D structure using a casting mold made of a water-soluble photocurable resin, and a water-soluble photocurable resin composition for producing a casting mold applied to the method. In manufacturing a 3D structure using a casting mold, a casting mold for manufacturing a 3D structure is produced by a photocuring-type 3D printing technique using a water-soluble photocurable resin that is cured by light irradiation and has a property of being readily dissolved in a neutral to basic aqueous solution. A base material of a 3D structure to be manufactured is injected in a liquid state into the produced casting mold and solidified. Thereafter, the water-soluble photocurable resin forming the casting mold is dissolved and removed using water or a basic aqueous solution. Accordingly, 3D products having more various shapes can be rapidly and precisely manufactured, and, at the same time, the range of selectable product materials can be effectively expanded.

## Description

### [Technical Field]

The present invention relates to a method for manufacturing 3D structure using a casting mold made of water-soluble photocurable resin, and to the water-soluble photocurable resin composition for producing the casting mold applied thereto. More particularly, the present invention relates to a method for manufacturing a 3D structure and to water-soluble photocurable resin composition for producing the casting mold applied to the method, wherein the casting mold for manufacturing a 3D structure is produced by a photocuring-type 3D printing technique using a water-soluble photocurable resin having a property of being readily dissolved in water or a basic aqueous solution after curing, a base material to form a 3D structure to be manufactured is injected in a liquid state into the produced casting mold and solidified, and then the water-soluble photocurable resin forming the casting mold is dissolved and removed using water or a basic aqueous solution, thereby enabling 3D structures having various shapes to be manufactured more rapidly and precisely.

### [Background Art]

Despite various advantages thereof, 3D printing technology, which has recently been widely used in various fields, still has a relatively slow output speed and many restrictions on materials that can be used for manufacturing 3D structures. Accordingly, problems continue to be raised in that mass production of products is difficult and that the technology is difficult to broadly apply to production of products made of various materials.

Meanwhile, as one of the conventional representative production methods used for producing 3D structures before the introduction of such 3D printing technology, there is a mold casting method.

Mold casting is a method for producing a 3D structure, in which a molten thermoplastic material or a chemically reactive liquid material is injected into a mold in which a space having the shape of a product to be produced is formed, the material injected into the mold is solidified through cooling or a chemical reaction to manufacture(i.e., cast) the product, and then the manufactured product and the mold are separated from each other.

In production of a product using mold casting of this type, a structurally rigid hard mold is generally used. In this case, however, in order to separate the manufactured product from the mold without damage, particularly when the shape or structure of the product is relatively complex, a complex mold design composed of a plurality of parts, and very precise manufacturing and separation processes are required.

In addition, a casting method using a soft mold made of silicone or the like, which has recently been introduced to overcome the limitations of the above-described hard mold casting, supports effective separation of a silicone mold and a product to be produced without damage to some extent by using the elasticity of the silicone forming the mold, even when the structure of the product to be produced is such that the inside of the cavity is wider than the entrance of the cavity. However, this method also cannot employ a single mold for a structure having a deep cavity or a negative cavity structure that widens considerably inward. Accordingly, as mentioned above, it is ultimately inevitable to design a mold by producing and assembling a plurality of molds respectively assigned to individual parts through a complex design composed of a plurality of parts and then disassembling and removing the molds again after production of the product, or to divide the product to be produced into a plurality of parts, cast the respective parts, and then assemble and fasten them using an adhesive or other coupling means.

However, such a method ultimately increases the manufacturing cost of the mold and also increases the time required for the manufacturing process, thereby causing an increase in the time and cost required for product production. In addition, in the case of a product having a cavity formed therein or a severe negative cavity structure, since it is inevitable to separately cast at least two or more divided parts and then assemble and fasten the parts, a post-treatment process for the fastening portion is necessarily required. And particularly in the case of a product requiring transparent physical properties, it is very difficult to completely remove traces of boundary surfaces.

Recently, in order to overcome the limitations of such mold casting methods, methods for manufacturing 3D structures using 3D printing have been actively developed, as disclosed in KR 10-2337392 B1, for example. However, as briefly mentioned above, 3D printing technology requires a relatively long time for a sequential printing process on a 2D layer basis and for removal of supports and post-processing after printing of a 3D structure, and thus has many difficulties in establishing a mass production system for products. Moreover, since applicable materials must satisfy certain physical property requirements according to each 3D printing method, 3D printing technology has limitations in that it is difficult to effectively replace production of products made of various materials according to conventional methods.

### [Detailed Description of the Invention]

### [Technical Problem]

The present invention has been devised to more effectively overcome the limitations of the above-described conventional art. An object of the present invention is to provide a method for manufacturing a 3D structure, in which a casting mold for manufacturing a 3D structure is produced by a photocuring-type 3D printing technique using a water-soluble photocurable resin having a property of being readily dissolved in water or a basic aqueous solution after curing, a base material of a 3D structure to be manufactured is injected in a liquid state into the produced casting mold and solidified, and then the water-soluble photocurable resin forming the casting mold is dissolved and removed using water or a basic aqueous solution, thereby presenting a method capable of effectively, rapidly, and precisely manufacturing 3D structures made of a broader range of product materials and having complex structures, and also to provide a water-soluble photocurable resin composition for producing a casting mold, which can be usefully applied to the method.

### [Technical Solution]

In order to achieve the above-described object, the present invention provides a method for manufacturing a 3D structure using a casting mold made of a water-soluble photocurable resin, the method comprising: producing a casting mold for manufacturing a 3D structure by casting, through a photocuring-type 3D printing process using a water-soluble photocurable resin as a printing material; injecting a liquid casting material for forming the 3D structure into the mold; removing bubbles remaining inside the mold using a vacuum chamber; curing the casting material injected into the mold; and immersing the casting mold, in which the injected material is in a cured state, in an aqueous solution to dissolve and remove the mold.

In addition, as a material for producing a dissolvable casting mold that can be effectively used in the above-described manufacturing method, the present invention provides a water-soluble photocurable resin composition for producing a dissolvable casting mold, the composition comprising: 10 to 50 wt% of a photocurable water-soluble oligomer comprising at least two epoxy or (meth)acrylate reactive groups for a photocuring reaction and including, in a backbone structure, at least one of a nitrogen bond (-N-), an ether bond (-O-), -OH, -COOH, -NH-, -NH₂, -N-CO-, M-OH(M denotes a metal), a sodium (Na⁺) salt, - SO₃⁻M⁺(M is H, Na, or K), or N⁺X⁻(X is OH, Cl, or BF₄); 50 to 90 wt% of a photocurable water-soluble monomer comprising one or two epoxy or (meth)acrylate reactive groups for a photocuring reaction and including, in a backbone structure, at least one of a nitrogen bond (-N-), an ether bond (-O-), -OH, -COOH, -NH-, -NH₂, -N-CO-, M-OH(M denotes a metal), a sodium (Na⁺) salt, -SO₃⁻M⁺(M is H, Na, or K), or N⁺X⁻(X is OH, Cl, or BF₄); and a photoinitiator added in an amount of 1 to 10 wt% based on a total weight of the resin composition in which the photocurable water-soluble oligomer and the photocurable water-soluble monomer are blended.

### [Advantageous Effects]

The method for manufacturing a 3D structure using a casting mold made of a water-soluble photocurable resin according to the present invention has an advantage in that, by producing a casting mold for manufacturing a 3D structure through a photocuring-type 3D printing technique, even a casting mold having a complex shape or structure can be produced relatively easily. At the same time, since the photocurable resin constituting the mold is configured to have a property of being readily dissolved in water or a basic aqueous solution, after a product injected into the mold is solidified, the produced product can be easily separated from the mold without damage by immersing the mold in water or a basic aqueous solution to dissolve the mold. Furthermore, products having a cavity formed therein or having a severe negative cavity structure can also be easily manufactured.

In addition, the method for manufacturing a 3D structure using a casting mold made of a water-soluble photocurable resin according to the present invention is differentiated simply in terms of the material of the mold, the method for producing the mold, and the method for separating the product from the mold, but basically produces a product by applying a mold casting method similar to conventional methods. Accordingly, the method has an advantage in that various existing materials, such as wax or polymers, which have conventionally been applied to products produced through mold casting, can be broadly utilized for product production.

Furthermore, the photocurable resin composition provided by the present invention has characteristics of relatively low viscosity about 100cPs to 20,000cPs, which allows liquid state application, and rapid photocuring speed, so that it can be broadly used in SLA(Stereolithography) type 3D printing using various light sources, such as LCD, DLP, or laser. In addition, the photocurable resin composition is not dissolved in conventional organic solvents, such as alcohol, acetone, or ketones, which are mainly used for cleaning 3D printed articles, but has a property of being readily dissolved in a neutral or basic aqueous solution. Accordingly, after a casting mold for manufacturing a 3D structure is formed through a photocuring-type 3D printing process and a product injected into the mold is solidified, the casting mold is dissolved in an aqueous solution through a simple process of being immersed in water or a basic aqueous solution for a predetermined time, and is thereby easily separated without concern of damage to the structure or surface of the 3D structure solidified in the mold. Thus, the photocurable resin composition can be usefully applied to production of various 3D structures including complex shapes or cavity structures.

In addition, since the heat deflection temperature (HDT) of the photocurable resin after photocuring can be adjusted by controlling the components of the resin composition, the resin composition has an advantage in that it can be broadly used for production of 3D structures using various existing mold casting materials, including not only materials having relatively low melting points, such as wax structures used in lost wax casting, but also polymers or oligomers having relatively high melting points of 200°C or higher.

### [Brief Description of Drawings]

FIG. 1 is a flowchart schematically showing a process in which a method for manufacturing a 3D structure using a casting mold made of a water-soluble photocurable resin according to the present invention is performed.
FIG. 2 is a drawing exemplarily showing a casting mold produced to manufacture a buckle according to an embodiment of the present invention.
FIG. 3 is a drawing exemplarily showing a buckle manufactured using a lost-wax material according to the method for manufacturing a 3D structure using a casting mold made of a water-soluble photocurable resin according to the present invention.

### [Best Mode]

Hereinafter, several preferred embodiments of the present invention will be described in detail by way of examples with reference to the drawings. However, the present invention is not limited to the following embodiments without departing from the gist thereof.

### [Modes for Invention]

As briefly described above, in the method for manufacturing a 3D structure according to the present invention, a casting mold for manufacturing a 3D structure is produced using a water-soluble photocurable resin as a base material.

Here, the resin composition used for producing the casting mold for manufacturing a 3D structure according to the present invention is a water-soluble photocurable resin composition developed and optimized for production of a dissolvable casting mold used in the present invention. The resin composition has a property of being rapidly cured by a photoreaction such as ultraviolet(UV) light, and also has a property of being readily dissolved in a neutral to basic aqueous solution. Based on the above-described physical properties, the resin composition supports relatively easy production of casting molds having various and complex shapes and structures through a 3D printing process using a photocuring reaction, and, after a material injected into the mold is solidified into a 3D structure, the resin composition is immersed in water or a basic aqueous solution together with the solidified 3D structure and dissolved therein, thereby allowing the produced 3D structure to be easily separated from the mold without damage.

In order to implement these properties, the water-soluble photocurable resin composition for producing a dissolvable casting mold according to the present invention may comprise, as a base material, a mixture of a photocurable water-soluble oligomer and a photocurable water-soluble monomer each having an epoxy or (meth)acrylate reactive group for a photocuring reaction, and may further include **i)** a photoinitiator for the photocuring reaction, **ii)** a water-soluble resin added to improve processability of the casting mold, **iii)** a water-soluble filler added to improve dissolving power of the cured casting mold, **iv)** a pigment for improving precision of 3D printing when producing the casting mold, and **v)** other additives. The water-soluble photocurable resin composition in accordance with the present invention is characterized by having a low viscosity of 20,000cPs or less so that it can be effectively used in top-down or bottom-up 3D printing using DLP(Digital Light Processing), LCD(Liquid Crystal Display), laser, or the like.

### Components of Water-Soluble Photocurable Resin Composition for Producing Dissolvable Casting Mold

### (1) Photocurable Water-Soluble Oligomer

As an oligomer having at least two epoxy or (meth)acrylate reactive groups for a photocuring reaction, the photocurable water-soluble oligomer includes, in a backbone structure, a nitrogen bond(-N-) or an ether bond (-O-), or, in addition thereto, -OH, -COOH, -NH-, -NH₂, -N-CO-, M-OH(M denotes a metal), a sodium(Na⁺) salt, -SO₃⁻M⁺ (M is H, Na, or K), or N⁺X⁻(X is OH, Cl, or BF₄), so that the photocurable water-soluble oligomer can be readily dissolved in a neutral to basic aqueous solution. The molecular weight is generally in a range of 400g/mole to 500,000g/mole, and the viscosity at room temperature may be 1,000cPs or higher, or may exist in a solid state at room temperature.

### (2) Photocurable Water-Soluble Monomer

As a monomer having one or two epoxy or (meth)acrylate reactive groups for a photocuring reaction, the photocurable water-soluble monomer includes, in a backbone structure, a nitrogen bond(-N-) or an ether bond (-O-), or, in addition thereto, -OH, -COOH, -NH-, -NH₂, -N- CO-, M-OH(M denotes a metal), a sodium(Na+) salt, -SO₃⁻M⁺ (M is H, Na, or K), or N⁺X⁻(X is OH, Cl, or BF₄), so that the photocurable water-soluble oligomer can be readily dissolved in a neutral to basic aqueous solution. The molecular weight is generally 400g/mole or less.

### (3) Photoinitiator

In a 3D printing process, the photoinitiator performs a role of converting light energy transmitted from a light source into chemical energy so that the photocurable water-soluble resin can be cured, and various photoinitiators generally used in photocuring reactions may all be used.

Photoinitiators may be broadly classified into radical initiators and cationic initiators. As the radical initiator, benzophenone derivatives, benzyl ketones, monomeric hydroxyl ketones, polymeric hydroxyl ketones, α-amino ketones, acyl phosphine oxides, metallocenes, benzoin ethers, benzil ketals, α-hydroxyalkylphenones, α-aminoalkylphenones, and the like are commonly used. As the cationic initiator, isopropyl thioxanthenones, arylsulphonium salts, aryl iodonium salts, and the like may be used.

The water-soluble photocurable resin composition for producing a dissolvable casting mold according to the present invention may be prepared by blending the above-described photocurable water-soluble oligomer and photocurable water-soluble monomer at ratios of about 10 to 50 wt% and about 50 to 90 wt%, respectively. Here, the blending ratio may be appropriately adjusted according to the viscosity required by a 3D printer, and preferably, effective viscosity characteristics can be easily realized by blending about 20 to 40 wt% of the photocurable water-soluble oligomer and about 60 to 80 wt% of the photocurable water-soluble monomer.

In addition, the content of the photoinitiator added to the composition in which the above-described photocurable water-soluble oligomer and photocurable water-soluble monomer are blended may also be added in an amount of about 1 to 10 wt% per 100 wt% of the composition, according to the type and amount of light of a light source applied to the 3D printer, and preferably, it is desirable that the content be adjusted within a range of 2 to 5 wt%.

That is, in the water-soluble photocurable resin composition for producing a dissolvable casting mold according to the present invention, the basic composition of the resin composition is completed by adding a photoinitiator for a photocuring reaction to the composition in which the photocurable water-soluble oligomer and the photocurable water-soluble monomer are blended.

Here, the photocurable water-soluble oligomer included in the resin composition performs a function of increasing the overall strength of the casting mold by increasing the physical hardness and elongation at break of a 3D printed article through photocuring, and various commercially available products may be applied. Examples thereof may include SU550, SU550A, SU560, SWA8048, SWA8071, and SWA8083 manufactured by SOLTECH, and various other commercially available products may also be used.

In addition, the above-described commercially available products are often provided in a state of being blended with water or other solvents. In this case, in order to more effectively secure the structural integrity of the casting mold in a 3D printing process, it is recommended to use a product in which the content of water or solvent is 10 wt% or less.

The photocurable water-soluble monomer included in the resin composition provides a function of realizing an appropriate viscosity required in 3D printing by being mixed with the photocurable water-soluble oligomer having relatively high viscosity and thereby lowering the overall viscosity of the resin composition. Examples thereof may include ACMO(Acryloyl morpholine), DMAA(N,N-Dimethyl acrylamide), and HEAA(N-(2-Hydroxyethyl)acrylamide), which include a nitrogen bond(-N-), MAANa(Sodium Methacrylate), which includes a sodium salt, or 3-Sulfopropyl acrylate potassium salt, which includes -SO₃⁻M⁺.

Here, in the case of ACMO, since the glass transition temperature(Tg) has a high temperature value of 145°C or higher, ACMO can be usefully used, in particular, in a resin composition for producing a dissolvable mold that needs to be used at a high temperature.

In addition to the above-described photocurable water-soluble oligomer, photocurable water-soluble monomer, and photoinitiator, the water-soluble photocurable resin composition for producing a dissolvable casting mold according to the present invention may further include the following composition components.

### (4) Water-Soluble Resin

The water-soluble resin is a water-soluble resin having a structure that includes, in a backbone structure, a nitrogen bond(-N-) or an ether bond(-O-), or, in addition thereto, - OH, -COOH, -NH-, -NH₂, -N-CO-, M-OH(M denotes a metal), a sodium(Na⁺) salt, -SO₃⁻ M⁺(M is H, Na, or K), and N⁺X⁻(X is OH, Cl, or BF₄), and the like, so that the water-soluble resin can be readily dissolved in a neutral to basic aqueous solution, but has no photoreactive group such as the above-described epoxy or (meth)acrylate reactive group. The water-soluble resin may be added in order to increase the hardness and strength of the cured resin and to improve the processability of the casting mold.

Examples thereof may include polyvinyl alcohol(PVA) or polyglycerin, which include -OH, polyacrylamide(PAAM), which includes -NH₂, or PVP(polyvinylpyrrolidone), which includes -N-. In addition, examples thereof may include PVH(polyvinylamine hydrochloride), which includes chlorine (-Cl), polymaleic acid, which includes -COOH, or polystyrenesulfonic acid, which includes a sodium salt.

The above-described water-soluble resin having no photoreactive group may be added in a range of 5 to 40 wt% based on the total weight of the resin composition, but preferably, it is desirable to add the water-soluble resin in a range of 5 to 15 wt%.

### (5) Water-Soluble Filler

The water-soluble filler is in the form of a water-soluble powder and is readily dissolved in water, but is not dissolved at all in the photocurable oligomer or monomer and is maintained in a state of being mixed as a powder in the photocurable resin composition. The water-soluble filler is added in order to suppress shrinkage of the resin due to photocuring during curing of the resin by light and, at the same time, to effectively shorten the time required for the casting mold to be dissolved in an aqueous solution.

As examples of the water-soluble filler that may be added to the resin composition of the present invention, sugar, salt, potassium chloride(KCl), boric acid(H₃BO₃), potassium carbonate(KHCO₃), sodium carbonate(NaHCO₃), ammonium carbonate(NH₄HCO₃), calcium chloride(CaCl₂), and the like may be used. The type of water-soluble filler to be added may be appropriately selected according to the physical properties of the aqueous solution that will dissolve the casting mold, and the content of the filler is adjusted according to the pH concentration and temperature of the aqueous solution for dissolution and the structure of the casting mold.

In general, the water-soluble filler may be added in an amount of up to 50 wt% based on the total weight of the resin composition, but preferably, it is desirable to add the water-soluble filler in a range of 10 to 20 wt%.

### (6) Pigment

In a 3D printing process through light irradiation, the pigment performs a function of improving the precision of 3D printing by preventing light of a 2D image irradiated for each layer from leaking to the surrounding resin and curing the resin around the 2D image to be printed, thereby causing burrs or holes in the output article, or causing deformation of the printed article.

Any conventional pigment used in photocurable paints may be used, and a colored pigment is generally used for light absorption, but a transparent pigment may also be used. Preferably, black carbon is most ideal.

The pigment added to the resin composition may be appropriately selected according to the type and amount of light of a light source used for 3D printing, and is generally added in a range of 0.01 to 2.00 wt% based on the total weight of the resin composition. Preferably, it is desirable to add the pigment in a range of 0.02 to 0.10 wt%.

### (6) Other Additives

In addition, the water-soluble photocurable resin composition according to the present invention may include various other additives such as an antifoaming agent for removing bubbles, a dispersant for improving dispersibility of the added water-soluble filler, a polymerization inhibitor for preventing the resin composition from being cured during storage, and a silane additive for improving heat resistance of the resin composition. In general, such other additives may be added in a range of 0.5 to 2.0 wt% based on the total weight of the resin composition.

The water-soluble photocurable resin composition for producing a dissolvable casting mold according to the present invention implements the following characteristic physical properties through a combination of the composition components as described above.
► Photocurability: Curable through irradiation of light having an energy level of 1.0 to 10.0 mJ/cm² in a wavelength range of 200 to 900 nm.
► Viscosity: A viscosity allowing liquid application in a range of 100cPs to 20,000cPs, so that the resin composition can be effectively used in top-down or bottom-up 3D printing through light irradiation.
► Solubility: Solubility to such an extent that, when immersed in a neutral or alkaline aqueous solution having a pH of 6.0 or higher, a 5mm cubic 3D printed article can be completely dissolved or swollen within 3 hours.
► Washability: After being cured, the resin composition is not dissolved in conventional organic solvents such as alcohol, acetone, or ketones, and thus can be washed with an organic solvent after printing.
► Hardness after curing: After curing, a secant modulus of 500 MPa or higher and an elongation at break of 4% or higher.
► Heat resistance: A heat deflection temperature(HDT) of 70°C or higher, preferably 150°C or higher.

### Example 1. Water-Soluble Photocurable Resin Composition #1: Resin Composition A

A water-soluble photocurable resin composition A, which can be subjected to 3D printing through photocuring and is readily dissolved in a neutral or basic aqueous solution after curing, was prepared by adding 30.0 wt% of SWA8083, which is a photocurable water-soluble oligomer including a plurality of ether bonds(-O-) and a plurality of hydroxy groups(-OH), 56.0 wt% of HEAA[N-(2-Hydroxyethyl)acrylamide], which is a photocurable water-soluble monomer including -NH and -OH, 10.0 wt% of HEMA[2-Hydroxyethyl Methacrylate], which is a photocurable monomer including -OH, 3.35 wt% of TPO[2,4,6-trimethylbenzoyldiphenyl phosphine oxide] added as a photoinitiator, and, as other additives, 0.15 wt% of BKP, which is a carbon-dispersed black pigment manufactured by Ilsam Co., Ltd., and 0.5 wt% of BYK-011 as an antifoaming agent.

The resin composition A blended in the above-described manner had a viscosity of 520cPs at room temperature, and, when printed using an LCD-type 3D printer having a light intensity of 0.2 mW/cm², exhibited a curing time of 1.5 seconds at a layer thickness of 50 µm. In addition, a cured film formed of the resin composition A had a secant modulus of 1,200 MPa and an elongation at break of 1.5%.

### <Test of Solubility of Cured Resin Composition After Curing>

Using the resin composition A, a cube having a size of 5 mm × 5 mm × 5 mm was produced through 3D printing by a 50 µm-thick layer lamination method using an LCD-based 3D printer. Uncured resin remaining on the surface of the produced cube was then removed by washing with acetone, and a post-curing process was performed for 10 minutes in a post-curing device through irradiation with light having a light intensity of 20 mW/cm².

Thereafter, the printed cube specimens were immersed in NaOH aqueous solutions having different concentrations and temperatures, changes in solubility over time were observed, and the results were summarized in [Table 1].

**[Table 1]**

| Test No. | NaOH Concentration (wt%) | Aqueous Solution Temperature (°C) | After 6 Hours | After 12 Hours | After 24 Hours |
|---|---|---|---|---|---|
| SB01 | 0 | 25 | - | - | Swelling |
| SB02 | 4 | 25 | - | - | Completely Dissolved |
| SB03 | 10 | 25 | - | Completely Dissolved | |
| SB04 | 10 | 50 | - | Completely Dissolved | |
| SB05 | 10 | 80 | Completely Dissolved | | |
| SB06 | 20 | 25 | - | Completely Dissolved | |

### [Solubility of Cube According to Concentration and Temperature of NaOH Aqueous Solution]

As confirmed in [Table 1], it can be confirmed that the cube specimens printed using the water-soluble photocurable resin composition according to the present invention as a material are readily dissolved in a neutral to basic aqueous solution. Although the dissolution rate becomes faster as the concentration of NaOH increases, it was found that there was no significant change in the dissolution rate once the concentration of NaOH exceeded 10 wt%. In addition, when the comparative examples in the 10 wt% NaOH solution are examined, it can be confirmed that the dissolution rate becomes faster as the temperature of the aqueous solution increases.

### Example 2. Water-Soluble Photocurable Resin Composition #2: Resin Compositions B1 to B6

A resin composition B1 for testing compatibility of a non-reactive water-soluble resin in a resin composition was prepared by mixing, with a combination of 30.0 wt% of SWA8083, which is a photocurable water-soluble oligomer including a plurality of ether bonds(-O-) and a plurality of hydroxy groups(-OH), 56.0 wt% of HEAA[N-(2-Hydroxyethyl)acrylamide], which is a photocurable water-soluble monomer including -NH and -OH, 5.0 wt% of HEMA[2-Hydroxyethyl Methacrylate], which is a photocurable monomer including -OH, 3.35 wt% of TPO[2,4,6-trimethylbenzoyldiphenyl phosphine oxide] added as a photoinitiator, and, as other additives, 0.15 wt% of BKP, which is a carbon-dispersed black pigment manufactured by Ilsam Co., Ltd., 0.5 wt% of BYK-011 as an antifoaming agent, and 5.0 wt% of PVA(Polyvinylalcohol, molecular weight: 10,000 g/mole), which is a non-reactive water-soluble resin not including a photoreactive group.

Subsequently, while reducing the content of HEAA to 51.0 wt% and 41.0 wt%, respectively, the content of PVA was increased correspondingly to 10.0 wt% and 20.0 wt%, respectively, thereby preparing resin compositions B2 and B3.

At the same time, under the same conditions, PVA was replaced with polyglycerin(PG, molecular weight: 2,000 g/mole), which is another non-reactive water-soluble resin, thereby preparing resin compositions B4 to B6 having PG contents of 5.0 wt%, 10.0 wt%, and 20.0 wt%, respectively.

The resin compositions B1 to B6 mixed at the above-described blending ratios were placed in a water bath and stirred well, and then whether the non-reactive water-soluble resin was separated and precipitated at room temperature was confirmed.

**[Table 2]**

| Resin Composition | SWA 8083 | HEAA | HEMA | PVA | PG | Photoinitiator/Other Additives | Separation/ Precipitation |
|---|---|---|---|---|---|---|---|
| B1 | 30.0 | 56.0 | 5.0 | 5.0 | | 4.0 | Transparent |
| B2 | 30.0 | 51.0 | 5.0 | 10.0 | | 4.0 | Transparent |
| B3 | 30.0 | 41.0 | 5.0 | 20.0 | | 4.0 | Separation/ Precipitation |
| B4 | 30.0 | 56.0 | 5.0 | | 5.0 | 4.0 | Transparent |
| B5 | 30.0 | 51.0 | 5.0 | | 10.0 | 4.0 | Transparent |
| B6 | 30.0 | 41.0 | 5.0 | | 20.0 | 4.0 | Separation/ Precipitation |

### [Compatibility Test According to Content of Non-Reactive Water-Soluble Resin (Unit: wt%)]

As shown in [Table 2], it can be confirmed that both PVA and PG, which are non-reactive water-soluble resins, are well dissolved in the resin composition when blended at 5.0 wt% and 10.0 wt%. However, when the content is increased to 20.0 wt%, it can be confirmed that a portion thereof is not mixed with the resin composition and is separated and precipitated. As a result of repeated experiments performed while varying the content of the water-soluble resin, separation and precipitation did not occur in either PVA or PG within a range of 5.0 to 15.0 wt%.

### <Test of Physical Properties and Curing Speed of Resin Composition After Curing>

Among the above-described resin compositions B1 to B6, B1, B2, B4, and B5, for which compatibility of the water-soluble resin was confirmed, were used as printing materials, and the time required for a 50 µm-thick film to be completely cured in an LCD-based 3D printer having a light intensity of 0.2 mW/cm² was measured. Subsequently, the secant modulus and elongation at break of the completely cured film were measured.

**[Table 3]**

| Resin Composition | Viscosity (cPs) | Curing Time (sec.) | Secant Modulus (MPa) | Elongation at Break (%) | Drop Test | CNC Processability |
|---|---|---|---|---|---|---|
| B1 | 720 | 1.5 | 1,159 | 2.2 | Broken | Not Possible |
| B2 | 2,560 | 2.2 | 950 | 8.9 | Good | Possible |
| B4 | 580 | 1.5 | 920 | 3.2 | Broken | Not Possible |
| B5 | 820 | 2.4 | 560 | 9.8 | Good | Possible |

### [Physical Property Test of Resin Compositions Containing Non-Reactive Water-Soluble Resin and Printed Articles]

As confirmed in [Table 3], in the case of resin composition B1 containing 5.0 wt% of the non-reactive water-soluble resin, the curing time was 1.5 seconds, and it can be confirmed that resin composition B1 exhibited almost the same curing speed as resin composition A disclosed in Example 1, which does not contain a non-reactive water-soluble resin. However, in the case of resin composition B2 containing 10.0 wt% of the non-reactive water-soluble resin, the curing time was increased to 2.2 seconds. Thus, it can be confirmed that, as the content of the non-reactive water-soluble resin increases, the curing speed becomes slower and a larger amount of light energy is required, thereby increasing the time required for the 3D printing process for printing the output article.

When the physical properties of the cured film are examined, although the secant modulus of the cured film decreases as the content ratio of the non-reactive water-soluble resin increases, it can be confirmed that, conversely, the elongation at break of the cured film is improved as the content ratio of the non-reactive water-soluble resin increases. In other words, compared with the elongation at break of 1.5% of the film manufactured using resin composition A, which does not contain a non-reactive water-soluble resin, in Example 1, the elongation at break of the films manufactured using B1 to B5 containing the non-reactive water-soluble resin was found to increase to 2.2% to 9.8%.

Subsequently, cube printed articles having a size of 10 mm × 10 mm × 10 mm were printed using the same materials, and whether breakage occurred by free fall from a height of 1 m was confirmed. In addition, whether breakage or chipping occurred during CNC surface processing was confirmed. In order to pass these tests, an elongation at break of at least 4.0% or more is required, and resin compositions B2 and B5, each containing 10.0% of PVA or PG, exhibited elongation at break sufficient to pass the tests.

### <Test of Solubility of Cured 3D-Printed Article>

Using resin compositions B1, B2, B4, and B5 used in the above-described physical property test, and resin composition A disclosed in Example 1, cubes having a size of 5 mm × 5 mm × 5 mm were produced through 3D printing by a 50 µm-thick layer lamination method using an LCD-based 3D printer. Uncured resin remaining on the surfaces of the produced cubes was then removed by washing with acetone, and a post-curing process was performed for 10 minutes in a post-curing device through irradiation with light having a light intensity of 20 mW/cm².

Thereafter, the printed cube specimens were immersed in a NaOH aqueous solution having a concentration of 10 wt%, and changes in solubility over time at room temperature were observed.

**[Table 4]**

| Resin Com position | Non-Reactive Water-Soluble Resin Content (wt%) | After 3 Hours | After 6 Hours | After 12 Hours |
|---|---|---|---|---|
| A | 0.0 | | | Completely Dissolved |
| B1 | 5.0 (PVA) | 60% Dissolved | Completely Dissolved | - |
| B2 | 10.0 (PVA) | Completely Dissolved | - | - |
| B4 | 5.0 (PG) | 80% Dissolved | Completely Dissolved | - |
| B5 | 10.0 (PG) | Completely Dissolved | - | - |

### [Solubility of Resin Composition According to Content of Non-Reactive Water-Soluble Resin]

As confirmed in [Table 4], when a non-reactive water-soluble resin is additionally blended into the photocurable water-soluble resin composition according to the present invention, it can be confirmed that, as the content of the blended non-reactive water-soluble resin increases, the time required for the produced cube to be completely dissolved is shortened. In particular, as in the cases of B2 and B4, when about 10% of the non-reactive water-soluble resin is contained, complete dissolution was found to occur within 3 hours.

In addition, although a relatively faster dissolution rate appears in the resin composition containing PG, which has a relatively lower molecular weight of 2,000 g/mole, than in PVA, which has a molecular weight of 10,000 g/mole, as shown in the above-described comparison of physical properties, as the molecular weight of the added non-reactive water-soluble resin decreases, some physical properties of the printed article, such as the secant modulus, are relatively weakened. Therefore, it is preferable to selectively apply an appropriate type of non-reactive water-soluble resin according to the use and characteristics of the casting mold to be manufactured.

### Example 3. Water-Soluble Photocurable Resin Composition #3: Resin Compositions C1 to C6

A photocurable water-soluble resin composition C1 was prepared by mixing, with a combination of 30.0 wt% of SWA8083, which is a photocurable water-soluble oligomer including a plurality of ether bonds(-O-) and a plurality of hydroxy groups(-OH), 46.0 wt% of HEAA[N-(2-Hydroxyethyl)acrylamide], which is a photocurable water-soluble monomer including -NH and -OH, 5.0 wt% of HEMA[2-Hydroxyethyl Methacrylate], which is a photocurable monomer including -OH, 3.35 wt% of TPO[2,4,6-trimethylbenzoyldiphenyl phosphine oxide] added as a photoinitiator, 10.0 wt% of non-reactive water-soluble resin PVA, and, as other additives, 0.15 wt% of BKP, which is a carbon-dispersed black pigment manufactured by Ilsam Co., Ltd., 0.5 wt% of BYK-011 as an antifoaming agent, and 5.0 wt% of sugar in the form of 5 µm powder blended as a water-soluble filler.

Subsequently, while reducing the content of HEAA to 41.0 wt% and 36.0 wt%, respectively, the content of sugar was increased correspondingly to 10.0 wt% and 15.0 wt%, respectively, thereby preparing resin compositions C2 and C3.

At the same time, under the same conditions, sugar in the form of 5 µm powder blended as the water-soluble filler was replaced with calcium chloride in the form of 5 µm powder, thereby preparing resin compositions C4 to C6 having calcium chloride contents of 5.0 wt%, 10.0 wt%, and 15.0 wt%, respectively.

At this time, since the water-soluble filler applied to the present invention has a property of being readily dissolved in water but not being dissolved at all in the photocurable water-soluble resin composition, the powder size of the water-soluble filler to be blended should be carefully selected.

In this Example, for both sugar and calcium chloride, powders having an average particle size(d50) of 5 µm and a maximum particle size(d90) of 8 µm or less were used. The resin compositions C1 to C6 mixed at the above-described blending ratios were placed in a water bath and stirred well, and then whether the water-soluble filler powder was separated from the resin composition and deposited on the bottom at room temperature was confirmed.

**[Table 5]**

| Resin Composition | SWA 8083 | HEAA | HEMA | PVA | Sugar | Calcium Chloride | Photoinitiator/Other Additives | Filler Separation |
|---|---|---|---|---|---|---|---|---|
| C1 | 30.0 | 46.0 | 5.0 | 10.0 | 5.0 | - | 4.0 | None |
| C2 | 30.0 | 41.0 | 5.0 | 10.0 | 10.0 | - | 4.0 | None |
| C3 | 30.0 | 36.0 | 5.0 | 10.0 | 15.0 | - | 4.0 | None |
| C4 | 30.0 | 46.0 | 5.0 | 10.0 | - | 5.0 | 4.0 | None |
| C5 | 30.0 | 41.0 | 5.0 | 10.0 | - | 10.0 | 4.0 | None |
| C6 | 30.0 | 36.0 | 5.0 | 10.0 | - | 15.0 | 4.0 | None |

### [Test of Filler Separation of Resin Composition Containing Water-Soluble Filler (Unit: wt%)]

As confirmed in [Table 5], in the case of the water-soluble filler having an average particle size of 5 µm, separation from the resin composition was not observed even after 24 hours had elapsed after mixing. However, in a similar test, when a water-soluble filler having an average particle size of 10 µm was used, it was confirmed that a large amount of the filler was separated from the resin composition and precipitated on the bottom of the water bath within about 30 minutes. Accordingly, it can be confirmed that, when a water-soluble filler is blended into the photocurable water-soluble resin composition according to the present invention, it is preferable to use a powder having an average particle size of at least 5 µm or less.

### <Test of Physical Properties of Resin Composition After Curing and the Curing Speed>

Using the above-described resin compositions C1 to C6 as printing materials, the time required for a 50 µm-thick film to be completely cured in an LCD-based 3D printer having a light intensity of 0.2 mW/cm² was measured. Subsequently, the secant modulus and elongation at break of the completely cured film were measured.

**[Table 6]**

| Resin Composition | Viscosity (cPs) | Curing Time (sec.) | Secant Modulus (MPa) | Elongation at Break (%) | Drop Test | CNC Processability |
|---|---|---|---|---|---|---|
| C1 | 2,740 | 2.5 | 1,150 | 8.7 | Good | Possible |
| C2 | 2,860 | 3.2 | 1,220 | 8.2 | Good | Possible |
| C3 | 3,250 | 3.8 | 1,440 | 8.0 | Good | Possible |
| C4 | 2,720 | 2.6 | 1,240 | 8.6 | Good | Possible |
| C5 | 2,810 | 3.2 | 1,330 | 8.2 | Good | Possible |
| C6 | 3,140 | 3.9 | 1,550 | 7.9 | Good | Possible |

### [Physical Property Test of Resin Composition Containing Water-Soluble Filler and Printed Article]

As confirmed in [Table 6], it can be confirmed that, as the content of the water-soluble filler blended into the resin composition increases, a larger amount of light energy is required for curing the resin composition, and thus the time required for the 3D printing process for printing the output article gradually increases.

When the physical properties of the cured film are examined, it appears that, as the content ratio of the water-soluble filler increases, the secant modulus of the cured film increases, and, conversely, the elongation at break slightly decreases. However, it was confirmed that the cured films still exhibited excellent elongation at break of 7.9% or higher, and thus maintained sufficiently high elongation at break to pass a drop test for confirming whether breakage occurs by free fall and a CNC processability test.

### <Test of Solubility of Cured 3D-Printed Article>

Using resin compositions C1 to C6 used in the above-described physical property test and resin composition B2 disclosed in Example 2, which does not include a water-soluble filler, cubes having a size of 5 mm × 5 mm × 5 mm were produced through 3D printing by a 50 µm-thick layer lamination method using an LCD-based 3D printer. Uncured resin remaining on the surfaces of the produced cubes was then removed by washing with acetone, and a post-curing process was performed for 10 minutes in a post-curing device through irradiation with light having a light intensity of 20 mW/cm².

Thereafter, the printed cube specimens were immersed in a NaOH aqueous solution having a concentration of 10 wt%, and changes in solubility over time at room temperature were observed.

**[Table 7]**

| Resin Composition | Water-Soluble Filler Content(wt%) | After 1 Hour | After 3 Hours |
|---|---|---|---|
| B2 | 0.0 | Crack Occurred | Completely Dissolved |
| C1 | 5.0 (Sugar) | Crack Occurred | Completely Dissolved |
| C2 | 10.0 (Sugar) | 60% Dissolved | Completely Dissolved |
| C3 | 15.0 (Sugar) | Completely Dissolved | - |
| C4 | 5.0 (Calcium Chloride) | 60% Dissolved | Completely Dissolved |
| C5 | 10.0 (Calcium Chloride) | Completely Dissolved | - |
| C6 | 15.0 (Calcium Chloride) | Completely Dissolved | - |

### [Solubility of Resin Composition According to Content of Water-Soluble Filler]

As confirmed in [Table 7], when a water-soluble filler is additionally blended into the photocurable water-soluble resin composition according to the present invention, it can be confirmed that, as the content of the blended water-soluble filler increases, the time required for the produced cube to be completely dissolved is shortened. In particular, when calcium chloride was used as the filler, a relatively faster dissolution rate was shown compared with the case where sugar was used. From this, it can be predicted that not only the solubility in water of the water-soluble filler included in the resin composition, but also the crystal structure of the filler powder, affects the solubility of the resin composition.

As described above, the water-soluble photocurable resin composition according to the present invention can be broadly used in SLA-type 3D printing using various light sources through its low viscosity, which allows liquid application, and its rapid photocuring speed characteristics. At the same time, since the water-soluble photocurable resin composition has a property of being readily dissolved in a neutral or basic aqueous solution, after a casting mold for manufacturing a 3D structure is formed through a photocuring-type 3D printing process and a product injected into the mold is solidified, the casting mold is dissolved in an aqueous solution through a simple process of being immersed in water or a basic aqueous solution for a predetermined time, and is thereby easily separated without concern of damage to the structure or surface of the 3D structure solidified in the mold. Thus, the water-soluble photocurable resin composition can be usefully applied to production of various 3D structures including complex shapes or cavity structures.

Hereinafter, the method for manufacturing a 3D structure according to the present invention, which is performed using a dissolvable casting mold produced using the above-described water-soluble photocurable resin composition as a material, will be described in more detail with reference to the accompanying drawings.

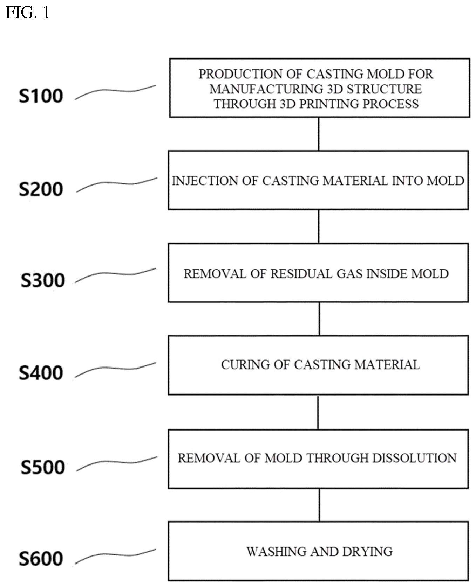

FIG. 1 is a flowchart schematically showing a process in which the method for manufacturing a 3D structure using a casting mold made of a water-soluble photocurable resin according to the present invention is performed. As shown in FIG. 1, in the present invention, a casting mold for manufacturing a 3D structure for casting a final 3D product to be produced is first produced through a photocuring-type 3D printing process(S100) using, as a printing material, a water-soluble photocurable resin satisfying the physical property requirements described above.

Here, as a representative 3D printing method applied to production of the casting mold for manufacturing a 3D structure according to the present invention, an SLA (Stereolithography) method may be used, and various light sources, such as LCD, DLP, or laser, may be utilized.

The above-described SLA-type 3D printing technology is already widely known and used in the technical field, and a detailed description thereof will be omitted in the present specification. In the method for manufacturing a 3D structure according to the present invention, by applying the photocuring-type 3D printing technology as described above, as briefly described above, even a casting mold having a relatively very complex shape or structure can be easily produced through a single simple 3D printing process without complicated prior preparation, such as separate partial design or separate production and assembly for each part. Accordingly, the conventional mold production process for producing a 3D product can be very effectively shortened, and the mold production cost can also be significantly reduced.

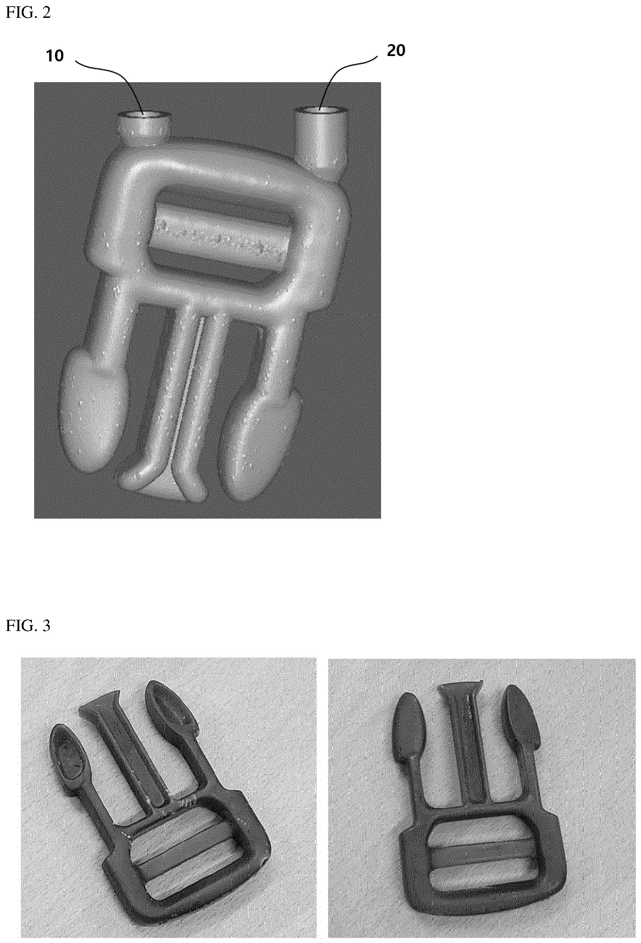

At this time, in producing a casting mold for casting a target 3D product through 3D printing using the photocuring characteristics of the resin composition as described above, as shown in FIG. 2, an injection port (runner, 10) through which a casting material is injected is formed on one side of the casting mold to be produced, and, at the same time, a discharge port (riser, 20) through which air in the mold is discharged is formed on the other side of the mold.

FIG. 2 is a drawing exemplarily showing a casting mold produced to manufacture a buckle according to an embodiment of the present invention. As shown in FIG. 2, the injection port (10) through which the casting material is injected is formed on one side of an upper portion of the casting mold, and the discharge port (20) through which air in the mold is discharged is formed on the other side.

In addition, in producing the casting mold through the above-described photocuring-type 3D printing, it is preferable not to form the thickness of the mold wall to be thicker than necessary.

As will be described again below, in the present invention, after the casting material injected into the mold is cured, the produced product and the mold are separated from each other by immersing the mold in water or a basic aqueous solution to dissolve the mold. Accordingly, as the thickness of the casting mold increases, more time is required to dissolve the mold, thereby reducing production efficiency.

Therefore, the thickness of the casting mold produced according to the present invention need only be sufficient to maintain structural stability until the casting material injected into the mold is cured, and it is preferable to set the thickness to an appropriate thickness in consideration of the weight, temperature, and/or pressure of the casting material injected into the mold.

Subsequently, when the casting mold is produced according to the above-described process, a liquid casting material is injected into the mold through the injection port (10) formed in the mold (S200), and bubbles remaining inside the mold are removed through the discharge port (20) using a vacuum chamber (S300).

Thereafter, the casting material injected into the mold through the above-described process is cured (S400). The curing process applied at this time may be appropriately selected according to the characteristics of the casting material injected into the mold.

That is, in the case of a thermoplastic resin such as an acrylic resin, or lost wax used for lost wax casting, the casting material in a molten state may be injected into a mold preheated to a predetermined temperature by injection and then cooled at room temperature. Alternatively, in the case of a material cured through a chemical reaction, such as a urethane resin or an epoxy resin, a liquid resin in which a main component and a curing agent component are mixed may be injected into the mold, bubbles included in the liquid resin may be removed through a vacuum chamber, and then the material injected into the mold may be allowed to completely cure through mutual reaction in a chamber in which a high-pressure environment is formed so that generation of additional bubbles can be suppressed.

After the material injected into the mold is completely cured, the casting mold in which the material injected therein is in a cured state is immersed in water or a basic aqueous solution to dissolve and remove the mold (S500), and product production is then completed through washing and drying (S600).

Here, the solution used to dissolve the mold may be neutral water as it is. However, when an alkaline aqueous solution is used, the dissolution rate of the mold can be further improved, and preferably, a neutral to basic aqueous solution in a range of pH 6 to pH 12 is used.

At this time, although dissolution can be performed relatively rapidly as the temperature of the neutral to basic aqueous solution used in the process of dissolving the mold increases, an excessively high temperature may affect not only the mold but also the product accommodated in the mold. Therefore, the temperature is appropriately selected in consideration of the mold material and the product material accommodated in the mold, and preferably, it is generally adjusted within a range of 20°C to 60°C.

In addition, it is a matter of course that, when flow is generated in the aqueous solution by a method such as stirring the aqueous solution in which the mold is immersed, the dissolution rate can be further improved.

3D structures produced through production of a dissolvable casting mold in the above-described manner and mold casting using the produced casting mold may be variously and broadly utilized, as briefly described above, not only for acrylic PMMA resin products, which have conventionally been most widely used as materials for producing 3D structures by mold casting, but also for production of epoxy and/or urethane resin products cured through chemical reaction, or silicone structures using reactive silicone.

In particular, the method for manufacturing a 3D structure using a casting mold made of a water-soluble photocurable resin according to the present invention can be very usefully applied to production of a wax structure for lost wax casting. Since the temperature of a wax melt injected into a mold for casting is generally not very high, about 120°C, and no separate high pressure is required during the casting process, the thickness of the casting mold made of the water-soluble resin composition and manufactured for casting the wax structure can be reduced to about 3 mm. Accordingly, not only can the time required for producing the casting mold be significantly shortened, but also, as the volume of the casting mold is reduced in this manner, the time required to dissolve the casting mold surrounding the wax structure after curing of the wax structure can be greatly shortened. Thus, there is an advantage in that the overall manufacturing efficiency of the wax structure can be greatly improved.

FIG. 3 is a drawing exemplarily showing a result obtained by manufacturing, using a lost wax material, a product having a complex buckle structure that is difficult to manufacture by a conventional general injection method, according to the method for manufacturing a 3D structure using a casting mold made of a water-soluble photocurable resin according to the present invention.

As can also be confirmed from the drawing, the buckle shown in FIG. 3 has a complex structure including a cavity portion, a recessed portion, and the like. Therefore, when the buckle is to be manufactured by a conventional general injection method, not only is a complicated preparation process, such as separate production and assembly of molds, required, but it is also not easy to separate the product from the mold after product casting. In addition, when the product is divided into a plurality of parts, cast, and then assembled in order to solve this problem, the time and cost required for the manufacturing process increase, and limitations inevitably arise in neatly finishing the assembled portions of the final product. However, by applying the method for manufacturing a 3D structure using a casting mold made of a water-soluble photocurable resin according to the present invention, it can be confirmed that a buckle product having a complex structure can be accurately implemented and manufactured through only a single simple casting process.

Although the present invention has been described above through representative embodiments of the present invention, the embodiments of the present invention described by way of example merely show examples of preferred embodiments of the present invention, and the present invention is not limited thereto. The scope of protection of the present invention is defined by the matters described in the claims set forth below. In addition, it is obvious that a person having ordinary skill in the art to which the present invention pertains may make various modifications without changing the gist of the present invention as claimed in the claims, and such modifications or improvements shall be deemed to fall within the scope of protection of the present invention, as long as the scope thereof is within the range of matters obvious to a person having ordinary skill in the art to which the present invention pertains.

### [Industrial Applicability]

The water-soluble photocurable resin composition presented in the present invention can be broadly used in SLA-type 3D printing using various light sources through its low viscosity, which allows liquid application, and its rapid photocuring speed characteristics. At the same time, since the water-soluble photocurable resin composition has a property of being readily dissolved in a neutral or basic aqueous solution, after a casting mold for manufacturing a 3D structure is formed through a photocuring-type 3D printing process and a product injected into the mold is solidified, the casting mold is dissolved in an aqueous solution through a simple process of being immersed in water or a basic aqueous solution for a predetermined time, and is thereby easily separated without concern of damage to the structure or surface of the 3D structure solidified in the mold. Thus, the water-soluble photocurable resin composition can be usefully applied to production of various 3D structures including complex shapes or cavity structures.

In addition, the method for manufacturing a 3D structure using a casting mold made of a water-soluble photocurable resin according to the present invention, by producing a casting mold for manufacturing a 3D structure through a photocuring-type 3D printing technique, supports relatively easy production even of a casting mold having a complex shape or structure. At the same time, through a simple process of immersing the mold in a neutral to basic aqueous solution to dissolve the mold, the manufactured product can be easily separated from the mold without damage. Furthermore, through the product production method based on the mold casting method that is basically adopted, various existing materials, such as wax or polymers, which have been applied to product production by conventional mold casting methods, can be broadly utilized for product production.

## Claims

1. A method for manufacturing a 3D structure using a casting mold made of a water-soluble photocurable resin, the method comprising:
producing a casting mold for manufacturing a 3D structure, for casting the 3D structure, through a photocuring-type 3D printing process using a water-soluble photocurable resin as a printing material;
injecting a liquid casting material for forming the 3D structure into the mold;
removing bubbles remaining inside the mold using a vacuum chamber;
curing the casting material injected into the mold; and
immersing the casting mold, in which the injected material is in a cured state, in an aqueous solution to dissolve and remove the mold.

2. The method for manufacturing a 3D structure using a casting mold made of a water-soluble photocurable resin according to claim 1,
wherein, after the step of immersing the casting mold in the aqueous solution to dissolve and remove the mold,
a step of washing and drying the 3D structure separated from the mold is further performed.

3. The method for manufacturing a 3D structure using a casting mold made of a water-soluble photocurable resin according to claim 1,
wherein the water-soluble photocurable resin comprises:
i) an oligomer having at least two epoxy or acrylate reactive groups and including nitrogen(N) in a backbone structure, or including at least one of -OH, -COOH, -NH-, -NH₂, -N-CO-, M-OH(where M denotes a metal), a sodium(Na⁺) salt, -SO₃⁻M⁺(where M is H, Na, or K), and N⁺X⁻(where X is OH, Cl, or BF₄);
ii) a monomer having at least one epoxy or acrylate reactive group and including nitrogen(N) in a structural component, or including at least one of -OH, -COOH, -NH-, -NH₂, -N-CO-, M-OH(where M denotes a metal), a sodium(Na⁺) salt, -SO₃⁻M⁺(where M is H, Na, or K), and N⁺X⁻(where X is OH, Cl, or BF₄); and
iii) a photoinitiator for a photocuring reaction.

4. The method for manufacturing a 3D structure using a casting mold made of a water-soluble photocurable resin according to claim 3,
wherein the water-soluble photocurable resin further comprises a water-soluble resin having no photoreactive group in a range of 5 wt% to 15 wt%.

5. The method for manufacturing a 3D structure using a casting mold made of a water-soluble photocurable resin according to claim 3,
wherein the water-soluble photocurable resin further comprises at least one functional additive.

6. The method for manufacturing a 3D structure using a casting mold made of a water-soluble photocurable resin according to claim 5,
wherein the functional additive includes a functional pigment for increasing precision of 3D printing, or carbon nanotubes or an inorganic additive for increasing a heat transfer coefficient of the casting mold to be printed.

7. The method for manufacturing a 3D structure using a casting mold made of a water-soluble photocurable resin according to claim 3,
wherein the water-soluble photocurable resin has a viscosity in a range of 100cPs to 20,000cPs.

8. The method for manufacturing a 3D structure using a casting mold made of a water-soluble photocurable resin according to claim 6,
wherein the water-soluble photocurable resin is composed such that, after curing, a heat deflection temperature(HDT) of the photocurable resin is at least 70°C or higher.

9. The method for manufacturing a 3D structure using a casting mold made of a water-soluble photocurable resin according to claim 1,
wherein, in the step of producing the casting mold for manufacturing a 3D structure through the photocuring-type 3D printing process,
a stereolithography(SLA) type 3D printing method is applied.

10. The method for manufacturing a 3D structure using a casting mold made of a water-soluble photocurable resin according to claim 1,
wherein, in the step of producing the casting mold for manufacturing a 3D structure through the photocuring-type 3D printing process,
an injection port through which the casting material is injected is formed on one side of the casting mold to be produced, and a discharge port through which air in the mold is discharged is formed on the other side of the mold.

11. The method for manufacturing a 3D structure using a casting mold made of a water-soluble photocurable resin according to claim 1,
wherein, in the step of producing the casting mold for manufacturing a 3D structure through the photocuring-type 3D printing process,
a thickness of the casting mold to be produced is determined in consideration of a weight, temperature, and pressure of the casting material injected into the casting mold.

12. The method for manufacturing a 3D structure using a casting mold made of a water-soluble photocurable resin according to claim 1,
wherein the step of curing the casting material injected into the casting mold is performed in a room-temperature environment or in a chamber in which a high-pressure environment is formed.

13. The method for manufacturing a 3D structure using a casting mold made of a water-soluble photocurable resin according to claim 1,
wherein the aqueous solution used in the step of dissolving and removing the casting mold is a neutral or basic aqueous solution in a range of pH 6 to pH 12.

14. The method for manufacturing a 3D structure using a casting mold made of a water-soluble photocurable resin according to claim 13,
wherein the temperature of the aqueous solution is maintained in a range of 20°C to 60°C.

15. The method for manufacturing a 3D structure using a casting mold made of a water-soluble photocurable resin according to claim 1,
wherein, in the step of immersing the casting mold in the aqueous solution to dissolve and remove the mold, flow is generated in the aqueous solution in which the casting mold is immersed.

16. A water-soluble photocurable resin composition comprising:
10 wt% to 50 wt% of a photocurable water-soluble oligomer including at least two epoxy or (meth)acrylate reactive groups for a photocuring reaction and including, in a backbone structure, at least one of a nitrogen bond(-N-), an ether bond(-O-), -OH, -COOH, - NH-, -NH₂, -N-CO-, M-OH(where M denotes a metal), a sodium(Na⁺) salt, -SO₃⁻M⁺ (where M is H, Na, or K), and N⁺X⁻(where X is OH, Cl, or BF₄); and
50 wt% to 90 wt% of a photocurable water-soluble monomer including one or two epoxy or (meth)acrylate reactive groups for a photocuring reaction and including, in a backbone structure, at least one of a nitrogen bond(-N-), an ether bond(-O-), -OH, - COOH, -NH-, -NH₂, -N-CO-, M-OH(where M denotes a metal), a sodium(Na⁺) salt, -SO₃⁻ M⁺ (where M is H, Na, or K), and N⁺X⁻(where X is OH, Cl, or BF₄);
wherein the water-soluble photocurable resin composition further comprises a photoinitiator added in a range of 1 wt% to 10 wt% based on a total weight of the resin composition in which the photocurable water-soluble oligomer and the photocurable water-soluble monomer are blended.

17. The water-soluble photocurable resin composition according to claim 16,
wherein the photocurable water-soluble monomer is one or a combination of two or more selected from ACMO (Acryloyl morpholine), DMAA(N,N-Dimethyl acrylamide), HEAA (N-(2-Hydroxyethyl)acrylamide), MAANa(Sodium Methacrylate), and 3-Sulfopropyl acrylate potassium salt.

18. The water-soluble photocurable resin composition according to claim 16,
wherein the photoinitiator includes at least one of:
benzophenone derivatives, benzyl ketones, monomeric hydroxyl ketones, polymeric hydroxyl ketones, α-amino ketones, acyl phosphine oxides, metallocenes, benzoin ethers, benzil ketals, α-hydroxyalkylphenones, and α-aminoalkylphenones, which are radical initiators; or
isopropyl thioxanthenones, arylsulphonium salts, and aryl iodonium salts, which are cationic initiators.

19. The water-soluble photocurable resin composition according to claim 16,
wherein the water-soluble photocurable resin composition further includes, in a range of 5 wt% to 15 wt% based on the total weight of the resin composition, a water-soluble resin having a structure that includes, in a backbone structure, at least one of a nitrogen bond(-N-), an ether bond(-O-), -OH, -COOH, -NH-, -NH₂, -N-CO-, M-OH(where M denotes a metal), a sodium(Na⁺) salt, -SO₃⁻M⁺ (where M is H, Na, or K), and N⁺X⁻(where X is OH, Cl, or BF₄), but does not include any photoreactive group including an epoxy or (meth)acrylate reactive group.

20. The water-soluble photocurable resin composition according to claim 19,
wherein the water-soluble resin is one or a combination of two or more selected from polyvinylalcohol (PVA), polyglycerin(PG), polyacrylamide(PAAM), PVP (polyvinylpyrrolidone), PVH(polyvinylamine hydrochloride), polymaleic acid, and polystyrenesulfonic acid.

21. The water-soluble photocurable resin composition according to claim 19,
wherein the water-soluble photocurable resin composition further includes, in a range of 10 wt% to 20 wt% based on the total weight of the resin composition, a water-soluble filler in the form of a water-soluble powder, the water-soluble filler having physical properties of being readily dissolved in water but not being dissolved at all in the photocurable oligomer or monomer.

22. The water-soluble photocurable resin composition according to claim 21,
wherein the water-soluble filler is one or a combination of two or more selected from sugar, salt, potassium chloride(KCl), boric acid(H₃BO₃), potassium carbonate(KHCO₃), sodium carbonate(NaHCO₃), ammonium carbonate(NH₄HCO₃), and calcium chloride(CaCl₂).

23. The water-soluble photocurable resin composition according to claim 21,
wherein the water-soluble filler is included in the resin composition in the form of a powder having an average particle size of 5 µm or less.

24. The water-soluble photocurable resin composition according to claim 16,
wherein the resin composition further includes, in a range of 0.5 wt% to 2.0 wt% based on the total weight of the resin composition, other additives consisting of one or a combination of two or more selected from a pigment, an antifoaming agent, a dispersant, a polymerization inhibitor, and a silane additive.

25. The water-soluble photocurable resin composition according to claim 24,
wherein the pigment is black carbon.

26. The water-soluble photocurable resin composition according to claim 16,
wherein the water-soluble photocurable resin composition has a viscosity in a range of 100cPs to 20,000cPs.

27. The water-soluble photocurable resin composition according to claim 16,
wherein the water-soluble photocurable resin composition has a secant modulus of 500 MPa or higher after being cured by light.

28. The water-soluble photocurable resin composition according to claim 16,
wherein the water-soluble photocurable resin composition has an elongation at break of 4% or higher after being cured by light.

29. The water-soluble photocurable resin composition according to claim 16,
wherein the water-soluble photocurable resin composition has a heat deflection temperature(HDT) of 70°C or higher after being cured by light.
